# EUROPÄISCHE PATENTANMELDUNG

(11) **EP 1 821 236 A2**
(43) Veröffentlichungstag der Anmeldung: **22.08.2007**
(21) Anmeldenummer: 07003453.3
(22) Anmeldetag: 19.02.2007
(51) Int. Cl.: G06K 7/00

(54) **Überprüfungsverfahren und Überwachunseinrichtung**

(30) Priorität: 20.02.2006 DE 102006007776
(71) Anmelder: RF-IT Solutions GmbH, 8020 Graz (AT)
(72) Erfinder: Berger, Dominik, 8046 Graz (AT)
(74) Vertreter: Epping - Hermann - Fischer

(57) **Zusammenfassung**

Es ist ein Überprüfungsverfahren vorgesehen, bei dem eine Identitätsinformation zumindest mit einem RFID-Transponder verbundene Produkteinheit von einem RFID-Leseeinheit ermittelt wird. Die Identitätsinformation wird an eine Datenverarbeitungseinrichtung weitergeleitet. Die ermittelte Identitätsinformation wird zumindest mit einer Identitätsinformation aus einer Gruppenidentifikation verglichen. Wenn die ermittelte Identitätsinformation mit der zumindest einen Identitätsinformation aus der Gruppe übereinstimmt, wird die diese Gruppe kennzeichnende Gruppeninformation signalisiert.

## Beschreibung

Die Erfindung betrifft ein Überprüfungsverfahren und eine Transportüberwachungseinrichtung, bei der dieses Überprüfungsverfahren anwendbar ist. Im Bereich der Warenlogistik wird in zunehmendem Maße der Einsatz von Automatismen bei der Überwachung des Transportes von Waren hinsichtlich der richtigen Zustellung und Vollständigkeit beziehungsweise dessen Identität notwendig. Hierzu ist es inzwischen üblich geworden, Verpackungseinheiten mit einem Barcodeaufkleber zu versehen, um diesen zu identifizieren beziehungsweise um sein Vorhandensein an bestimmten Kontrollstellen zu erfassen. Es ist heutzutage auch üblich Pakete, die in den Versand gelangen, mit einem Barcodeaufkleber zu versehen und seine Bereitstellung zu erfassen. Spätestens bei der Übergabe des Paketes beim Empfänger, wird vom Überbringer dieses Paket nochmals durch scannen des Barcodelabels erfasst und der Empfang vom Empfänger in dem gleichen elektronischen Dokument, in dem der erfasste Barcode enthalten ist bestätigt.

Im Rahmen der Logistik ist die Verwendung von Barcodeaufklebern in unterschiedlichsten Formen gebräuchlich. So sind auch Transportbehälter, die innerhalb eines Herstellungsbetriebes Teile, Zwischenprodukte, Endprodukte etc. transportieren, mit derartigen Aufklebern versehen, um deren Transport innerhalb des Herstellungsbetriebes zu überwachen und deren Inhalt automatisch identifizierbar zu transportieren.

Für das Erkennen eines Barcodeetikettes ist es notwendig, dass der Barcode präzise von einem Laserstrahl abgetastet wird, der Teil eines derartigen Barcodelesegerätes ist. Nicht nur die Tatsache, dass es in vielen Fällen unverhältnismäßig aufwändig ist, die notwendige Präzision in der Ausrichtung des Barcodelabels gegenüber dem Lesegerät für ein automatisches Lesen zu realisieren, setzt das optische Abtasten des Barcodezeichens Grenzen in der Geschwindigkeit des Abtastens. Aus diesem Grund hat in den letzten Jahren zunehmend die Verwendung von so genannten RFID-Label in der Logistik Einzug genommen. Dies dokumentiert sich beispielsweise im Coorganisation 3/2004 Seite 18 bis 25 "EPC Global Goods und Bits vernetzen sich", in dem angegeben ist, dass ein so genannter EPC-Code für diese RFID-Label verwendet wird, damit eine internationale Verwendung dieser Technologie realisierbar ist.

Grundsätzlich sind RFID-Label wie folgt aufgebaut. Es handelt sich um ein Etikett, ähnlich einem Barcode-Label, das ein Halbleiterchip mit einer integrierten Schaltung aufweist. Dieser integrierte Schaltkreis beinhaltet einen Bereich zum Abspeichern von Informationen, eine Sende- und Empfangseinrichtung zum Empfangen und Aussenden von Informationen und eine Steuereinrichtung, die das Senden und Empfangen, das Abspeichern von Informationen in dem Speicherbereich beziehungsweise das Auslesen dieser Informationen und Aufbereiten zum Versenden der abgespeicherten Information über die Sendeeinheit steuert. Mit dem Halbleiterchip ist eine Antenne verbunden, die je nach verwendetem Frequenzbereich in geeigneter Weise ausgebildet ist.

Da diese RFID-Label mittels Funksignale ihren Informationsaustausch schreiben und die hierfür benötigte Energie aus dem Funksignal gewinnen, besteht für die Positionierung des mit dem RFID-Label versehenen Gegenstandes gegenüber dem Lesegerät ein großer Spielraum. Dieser Spielraum macht den Einsatz dieser Technologie für ein breites Anwendungsgebiet reizvoll.

Im Detail ist aus der DE 10 2004 025663A1 bekannt, einzelne Produkte mit einem derartigen RFID-Label zu kennzeichnen, um diese beispielsweise gemäß dem EPC-Code zu kennzeichnen. Werden mehrere Produkte zu einer Verpackungseinheit zusammengefasst, so wird in jedem einzelnen Label zusätzlich eine Paketidentifikation hinterlegt. Eine derartige Paketidentifikation kann beispielsweise auch die Anzahl der einzelnen Produkte, die zu einem Paket beziehungsweise Verpackungseinheit zusammengefasst sind, darstellen. Das heißt beim Zusammenstellen der Verpackungseinheit wird die Anzahl der Produkte manuell oder über die elektronisch erkennbaren einzelnen Produktlabel ermittelt und in jedem der sich in der Verpackungseinheit befindlichen Einzellabel einprogrammiert. Nachteilig ist, dass trotz Verwendung von Funkwellen es durch Störeinflüsse zu Schreib- aber auch zu Lesefehlern kommen kann. Um dies zu überwinden, wird beispielsweise bei der Überprüfung einer transportierten Verpackungseinheit ein statistisches Leseverfahren angewandt. Das heißt, es werden die Identifikationen von allen oder mehreren RFID-Labeln ausgelesen und beispielsweise die Information, die sich durch Mehrheitsbildung ergibt als die tatsächliche Information beziehungsweise Paketidentifikation festgelegt. Um dies zu umgehen, wird beispielsweise in den meisten Fällen die Verpackungseinheit als solche mit einem separaten RFID-Label versehen, das die nformation über die Verpackungseinheit, bzw. Paketinformation enthält beziehungsweise diese identifiziert. Obwohl das RFID-Label als Massenware hergestellt wird und entsprechend im Vergleich zum Wert mit den damit gekennzeichneten Produkten beziehungsweise Verpackungseinheiten vernachlässigbar ist, ist es für Versandhäuser wünschenswert, wenn sie ihre Verpackungseinheiten nicht separat mit einem Label zu deren Kennzeichnung versehen müssen.

Entsprechend ist es Aufgabe der Erfindung ein Überprüfungsverfahren und eine Transportüberwachungseinrichtung vorzusehen, die ein derartiges Überprüfungsverfahren anwendet, bei dem auf die zusätzliche Kennzeichnung von Verpackungseinheiten durch RFID-Label verzichtet werden kann.

Erfindungsgemäß ist vorgesehen, dass bei dem Überprüfungsverfahren eine Identitätsinformation zumindest einer mit einem RFID-Transponder verbundene Produkteinheit von einer RFID-Leseeinheit ermittelt wird. Die Identitätsinformation wird an eine Datenverarbeitungseinrichtung weitergeleitet, wo die ermittelte Identitätsinformation mit zumindest einer aus einer bereitgestellten Gruppenidentifikation, die eine Gruppe von Produkteinheiten kennzeichnet, extrahierten Identitätsinformation verglichen wird. Wenn die ermittelte Identitätsinformation mit der zumindest einen extrahierten Identitätsinformation der Gruppe übereinstimmt, wird die diese Gruppe kennzeichnende Gruppeninformation bzw. die Zugehörigkeit der Produkteinheit zu der Gruppe signalisiert.

Identitätsinformation bedeutet, dass ein Produkt eineindeutig gekennzeichnet und damit identifizierbar ist, somit macht die Identitätsinformation der zu einer Gruppe zusammengefassten Produkteinheiten, die in einer Datenverarbeitungseinrichtung zur Verfügung gestellt wird, diese Produkteinheiten mit einer als Gruppe zusammengefasste Anzahl von Produkteinheiten vergleichbar, in dem die sich aus der Gruppenidentifikation ergebene Identitäten bestimmt und mit den Identitätsinformationen der Produkteinheiten verglichen wird.

Sobald eine Identitätsinformation mit einer aus einer Gruppeninformation extrahierten Identitätsinformation übereinstimmt, ist die aus Produkteinheiten zusammengesetzte Gruppe durch die einzelne Produkteinheit ebenfalls eineindeutig identifiziert.

Diese Vorgehensweise ermöglicht nicht nur zusätzliche RFID-Transponder für die Gruppe einzusparen, sondern auch den für den Transport einer derartigen Gruppe üblicherweise angefertigten Lieferschein einzusparen. Weitere vorteilhafte Ausgestaltungen sind in den Unteransprüchen angegeben.

Im Folgenden wird die Erfindung anhand von Ausführungsbeispielen unter Bezugnahme auf die Zeichnungen erläutert.

Es zeigen:
Figur 1 ein erstes Ausführungsbeispiel der Überwachungseinrichtung und
Figur 2 ein zweites Ausführungsbeispiel der Überwachungseinrichtung.

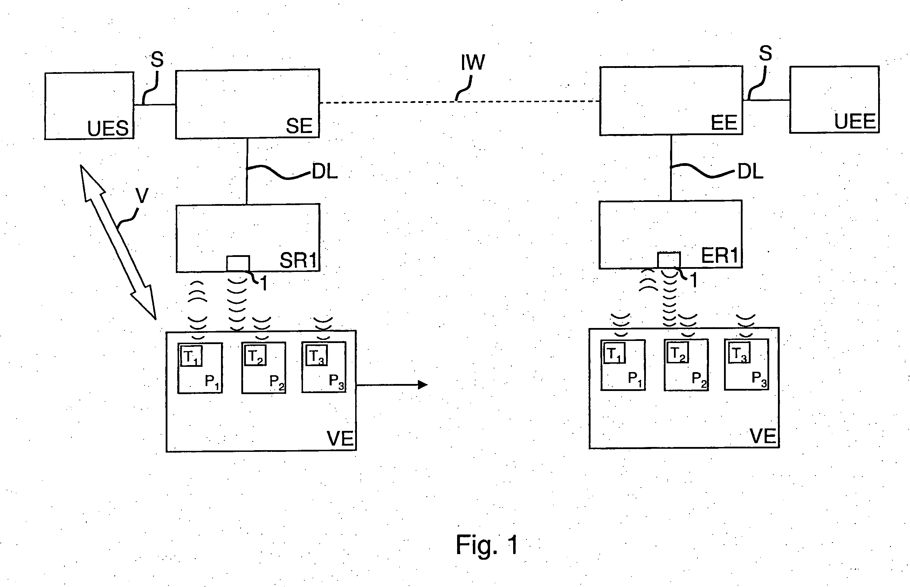

Figur 1 zeigt ein erstes Ausführungsbeispiel einer Transportüberwachungseinrichtung. Ein Sendereader SR1, der auch als RFID-Transponderleseeinrichtung bezeichnet werden kann, ist über eine Datenleitung DL mit einer sendeseitigen Datenverarbeitungseinrichtung SE verbunden. Die Datenverarbeitungseinrichtung SE ist über einen Kommunikationskanal IW mit einer empfangsseitigen Datenverarbeitungseinrichtung EE verbunden. An dieser ist wiederum ein Empfangsreader ER1 über eine Datenleitung DL angeschlossen. Weiterhin ist mit der empfangsseitigen Datenverarbeitungseinrichtung EE eine Überwachungseinrichtung UEE über eine übliche Schnittstelle S angeschlossen.

Zum besseren Verständnis wird zunächst auf die technischen Möglichkeiten sogenannter RFID-Transponder Tn eingegangen. Diese bestehen aus einem Chip und einer Antenne. Es ist zwar auch bekannt, die Antenne mit auf dem Chip auszubilden, heutzutage weiter verbreitet sind jedoch Anordnungen, wo Chip und Antenne auf einem gemeinsamen Substrat, d.h. gemeinsam auf einem Träger angeordnet sind. Antennenanschlüsse sind mit zugeordneten Kontakten auf dem Chip verbunden. Der Chip weist eine integrierte Schaltung auf, die die für ihren Betrieb benötigte Energie aus der empfangenen elektromagnetischen Energie gewinnt. Die integrierte Schaltung auf dem Chip weist üblicherweise eine Sendeschaltung und eine Empfangsschaltung auf. In dieser werden die empfangenen Signale demodulieren und aus den empfangenen Signal über eine Gleichrichtschaltung die für den Betrieb der integrierten Schaltung benötigte Energie gewonnen. Über die Sendeschaltung werden Informationen vom RFID-Transponder zu einem Reader übermittelt.

Das demodulierte Signal wird einer Steuerschaltung zugeführt, um von der Steuerschaltung in geeigneter Weise ausgewertet zu werden. Heutzutage weist jeder Chip, zumindest für die Verwendung im RFID-Transponder eine eindeutige Signatur auf, die auch als UID bezeichnet wird. Diese UID wird in der Regel vom Hersteller in nicht löschbarer Weise in dem Chip beziehungsweise integrierten Schaltung abgespeichert. Diese UID ist somit eine Minimalinformation, die der Transponder aufweist. In der Regel weist er jedoch zusätzliche Speicherkapazität zum Abspeichern weiterer Informationen auf.

Im Weiteren soll jedoch zunächst einmal ein erfindungsgemäßes Überprüfungsverfahren bei alleiniger Verwendung dieser UID erläutert werden. Gemäß Figur 1 wird eine Verpackungseinheit VE, die die drei Produkte P1, P2 und P3 aufweist und jeweils mit einem Transponder T1, T2 und T3 markiert sind, an dem Sendereader SR1 vorbeigeführt. Der Sendereader SR1 erfasst die UIDs der drei RFID-Transponder T1 bis T3. Die UID wird zur Datenverarbeitungseinrichtung SE vom Sendereader SR1 übertragen. Eine Überwachungseinrichtung gibt der Datenverarbeitungseinrichtung an, dass die drei ausgelesenen UIDs zu einer Gruppenidentifikation zusammenzufassen sind. Die Überwachungseinrichtung kann manuell von einer Bedienperson in Betrieb gesetzt werden. Dazu erkennt sie auf visuellem Weg V, dass die Verpackungseinheit VE vorliegt und lässt über die Datenverarbeitungseinrichtung SE den Sendereader SR1 die Transponder T1 bis T3 der Verpackungseinheit VE auslesen. Optional gibt die Bedienperson zusätzliche Informationen, die ihm vorliegen oder die auf der Verpackungseinheit aufgetragen sind in die Datenverarbeitungseinrichtung ein.

In einer weiteren Option werden die zusätzlichen Informationen teilweise oder vollständig mittels optischer Abtastung eines auf der Verpackungseinheit befestigten Barcodelabels und/oder anderer optisch erfassbarer Information erfasst und der Datenverarbeitungseinrichtung SE zugeführt. Dieses Barcodelabel stellt in dieser Option ein dem RFID-Label hierarchisch übergeordnetes Label dar und kennzeichnet die gesamte Verpackungseinheit.

Anstelle des manuellen Betreibens soll vom den Sendereader SR1 das Vorliegen der Verpackungseinheit VE automatisch erkannt werden. Hierzu ist ein Sensor 1 am Sendereder SR1 vorgesehen, der das Vorliegen der Verpackungseinheit erkennt. Mit dem Erkennen wird der Sendereader veranlasst die Transponder in seinem Empfangsbereich zu ermitteln und auszulesen. Als Sensor ist beispielsweise jegliche Art von Annäherungssensoren geeignet. Dieser kann jedoch auch durch ein geeignetes Betriebsverfahren des Sendereaders SR1 realisiert werden. Der Sendereader SR1 wird in zeitlichen Abständen veranlasst die Transponder in seinem Empfangsbereich zu ermitteln und auszulesen. Dies bedeutet, dass gegenüber einem Zeitpunkt, in dem kein Transponder erkannt wurde zu einem bestimmten Zeitpunkt zumindest ein Transponder erkannt wird und das Eintreffen einer Verpackungseinheit somit detektiert wird. Danach werden über ein vorgegebenes Zeitintervall beispielsweise alle im Empfangsbereich liegenden Transponder ermittelt und ausgelesen.

Alternativ hierzu ist vorgesehen, dass nach dem Erkennen dass eine Verpackungseinheit vorliegt eine vorgegebene Zeit abgewartet wird innerhalb der kein zusätzlicher Transponder erkannt wird. Ist dies der Fall wird davon ausgegangen, dass alle Transponder einer Verpackungseinheit gelesen sind. Dies hat deshalb eine größere Bedeutung, weil auf diese Weise ein Signal weitergeleitet werden kann, das angibt, dass die Verpackungseinheit weiter bewegt werden kann, da alle Transponder ausgelesen sind.

Im Einsatz in einer Produktions- oder Packstraße wäre es denkbar, dass im Empfangsbereich des Sendereders SR1 ein Roboter oder ein irgendwie geartete Verpackungsautomat die Verpackungseinheit VE aus dem Produkten P1 bis P3 mit Transpondern T1 bis T3 zusammenstellt oder zusammengestellt in den Empfangsbereich gebracht. Nach erfolgter Zusammenstellung werden der Überwachungseinrichtung UES oder der sendeseitigen Datenverarbeitungseinrichtung SE direkt das Vorliegen der fertigen Verpackungseinheit und gegebenenfalls die damit verbundenen zusätzlichen Informationen übermittelt.

Empfangsseitig können ähnliche Maßnahmen wie auf der Sendeseite vorgesehen sein, um das Vorliegen der Verpackungseinheit zu erkennen und das Lesen des Empfangsreaders ER1 zu veranlassen. Dies bedeutet, es kann sowohl ein Näherungssensor 1 als auch eine automatische Erkennung, dass gegenüber einem vorherigen Nichtvorlegen eines zu empfangenden Transponders eine Änderung eingetroffen ist und damit das Vorhandensein einer Verpackungseinheit detektiert werden, vorgesehen sein. Genauso kann eine Transporteinrichtung die Verpackungseinheit in dem Empfangsbereich des Empfangsreders ER1 bringen und der Überwachungseinrichtung oder der Datenverarbeitungseinrichtung direkt signalisieren, dass die Verpackungseinheit zum Erkennen und Auslesen ihrer Transponder vorliegt.

Dies bedeutet, angewandt auf heutige Logistik, dass so etwas wie ein elektronischer Lieferschein erzeugt wird, auf dem hinterlegt wird, dass drei Produkte, die mit den UIDs der Transponder T1 bis T3 gekennzeichnet sind, zusammengefasst und ausgeliefert werden. Diese Information wird über den Informationskanal IW an die empfangsseitige Datenverarbeitungseinrichtung übermittelt. Diese gibt die Information an die empfangsseitige Überwachungseinrichtung UEE weiter. Gelangt die Verpackungseinheit VE zum Empfangsreader ER1, so liest er die UIDs der drei RFID-Transponder T1 bis T3 aus. Die UIDs werden der empfangsseitigen Datenverarbeitungseinrichtung EE zur Verfügung gestellt. Die empfangsseitige Überwachungseinrichtung UEE erhält diese Information, vergleicht diese mit eingegangenen Gruppenidentifikationen und erkennt, dass sie von der sendeseitigen Datenverarbeitungseinrichtung SE eine mit der Verpackungseinheit VE verbundene Gruppenidentifikation in Form einer Lieferankündigung, beziehungsweise einen Lieferschein empfangen hat, und dass die dazugehörige Verpackungseinheit VE vom Empfangsreader ER1 erfasst wurde. Wie dies in der Logistik üblich ist, könnte nunmehr die Überwachungseinrichtung UEE über die empfangsseitige Datenverarbeitungseinrichtung EE und dem Übertragungskanal IW der sendeseitigen Datenverarbeitungseinrichtung SE die Lieferung bestätigen. Dieser würde daraufhin gegebenenfalls auf postalischem oder auch auf elektronischem Wege den Versand einer Rechnung veranlassen.

Im Weiteren werden diverse Ausgestaltungen des erfindungsgemäßen Verfahrens beziehungsweise der erfindungsgemäßen Einrichtung erläutert.

Wenn im vorangegangenen Ausführungsbeispiel davon ausgegangen ist, dass die RFID-Transponder Tn allein ihre UID gespeichert haben, soll im Weiteren zunächst davon ausgegangen werden, dass eine zusätzliche Information, wie beispielsweise eine Produktinformation über das Produkt Pn, mit dem der RFID-Transponder verbunden ist enthält. Dies bedeutet auf Figur 1 bezogen, dass jeder der drei RFID-Transponder T1 bis T3 zusätzlich zur UID eine mit dem jeweiligen Produkt P1 bis P3 zugeordnete Information, enthält. Wird nunmehr die Verpackungseinheit VE an dem Sendereader SR1 vorbeigeführt, so wird diese Information aus den Transpondern T1 bis T3 ausgelesen und der sendeseitigen Empfangseinrichtung SE zur Verfügung gestellt. Die Überwachungseinrichtung erkennt aus der Kombination der Produkte P1 bis P3, dass es sich um eine bestimmte Verpackungseinheit handelt. Dies kann beispielsweise bedeuten, dass es sich um die Warenzusammenstellung aus einer bestimmten Bestellung handelt. Das erkennt die Überwachungseinrichtung z.B. aus dem Vergleich einer ihr zur Verfügung stehenden Bestelldatenbank, ermittelt daraus den Empfänger und veranlasst die Datenverarbeitungseinrichtung eine aus diesen Informationen zusammengesetzte Gruppenidentifikation zu erzeugen und an den bestimmten Empfänger über den Kommunikationskanal IW zu übermitteln. Als spezielle Option könnte nunmehr vorgesehen sein, dass diese Information gegebenenfalls mittels des Sendereaders SR1 in die Transponder T1 bis T3 zusätzlich einprogrammiert wird. Die empfangsseitige Überwachungseinrichtung erhält somit einen deutlich umfangreicheren Lieferschein.

Beim Empfang der Verpackungseinheit VE ist die zusätzlich erhaltene Information, die der Empfangsreader ER1 aus den RFID-Transponder T1 bis T3 ausliest genau genommen jedoch redundant. Diese Redundanz ist darin zu sehen, dass sendeseitig bereits vorgesehen war, dass die Verpackungseinheit die Transponder T1 bis T3 enthält, die durch UIDs eindeutig gekennzeichnet sind und damit dem speziellen Empfänger zugeordnet sind. Dies bedeutet, dass das Einprogrammieren von Informationen über den Empfänger in den RFID-Transponder T1 bis T3 eine redundante Information ist. Diese redundante Information weist jedoch den Vorteil auf, dass wenn die Verpackungseinheit über einen längeren und nicht so gut überschaubaren Transportweg, wie er in Figur 1 dargestellt ist, an einen weiteren nicht dargestellten Reader vorbeigeführt wird, kann an dieser Stelle überprüft werden, wer der Empfänger der Verpackungseinheit VE ist, ohne dabei Zugriff auf den Kommunikationskanal IW zu haben.

Es sei jedoch an dieser Stelle bemerkt, dass redundante Information auch den Vorteil aufweist, dass Missverständnisse, die durch gestörte Datenübertragungen oder durch Störung beim Auslesen oder Programmieren der RFID-Transponder entstehen können, vermeidbar sind.

Wenn in diesem zweiten Ausführungsbeispiel zunächst davon ausgegangen war, dass die zusätzlichen Produktinformationen über die Produkte P1 bis P3 bereits in den Transponder T1 bis T3 hinterlegt ist, das heißt abgespeichert ist, kann optional diese Information auch erst in dem Moment über den Sendereader SR1 in die jeweiligen Transponder T1 bis T3 einprogrammiert werden. Dazu muss diese Produktinformation jedoch zugeordnet werden. Beispielsweise könnte eine visuelle Kontrolle über den visuellen Überwachungsweg V der Überwachungseinrichtung die notwendigen Produktinformationen zuführen, die dann wiederum über den bereits beschriebenen Informationsweg über die sendeseitige Datenverarbeitungseinrichtung SE und im Sendereader SR1 den jeweiligen Transpondern T1 bis T3 einprogrammiert werden.

Handelt es sich jedoch um Prozessinformation, das heißt um Information aus einem Fertigungsprozess oder aus einem Bereitstellungsprozess heraus, wird die Verpackungseinheit VE mit den Produkten P1 bis P3 dem Sendereader zugeführt und die damit verbundene zeitlich gesteuerte Information an die Überwachungseinrichtung geleitet. Dies ist ein durchaus probater Weg, wenn Störungen weitgehend ausgeschlossen sind.

Bisher wurde allgemein davon gesprochen, dass die sendeseitige Datenverarbeitungseinrichtung mit der empfangsseitigen Dateneinrichtung über einen Kommunikationskanal IW verbunden sind. Dieser Kommunikationskanal kann in vielfältigster Weise ausgebildet sein. In allgemeinster Form könnte dies eine Internetverbindung sein es könnte jedoch genauso gut eine Telefonleitung oder eine direkte Datenleitung sein. Darüber hinaus ist anzumerken, dass es sich in dem Falle, dass es sich um eine Telefonleitung handelt, diese selbstverständlich nicht drahtgebunden sein muss. Gleiches gilt für die Ausbildung des Datenkanals über das Internet. Auch hier sind bereits drahtlose Kommunikationswege bekannt.

Gemäß Figur 1 wird eine weitere Ausgestaltung des erfindungsgemäßen Verfahrens beziehungsweise der erfindungsgemäßen Anordnung erläutert. War bisher davon ausgegangen, dass die Verpackungseinheit VE mit ihren RFID-Transpondern T1 bis T3 an dem Sendereader SR1 erfasst und daraus eine Gruppeninformation als so genannter Lieferschein erzeugt wurde, die an die eingangsseitige Datenverarbeitungseinrichtung EE übermittelt wurde, soll nunmehr davon ausgegeben werden, dass die Verpackungseinheit VE allein am Empfangsreader ER1 erfasst wird.

In diesem Ausführungsbeispiel wird in analoger Weise die den RFID-Transpondern T1 bis T3 abgespeicherte Information über den Empfangsreader ER1 der Datenverarbeitungseinrichtung EE übermittelt. In einer ersten Untervariante veranlasst die Überwachungseinheit UEE die Datenverarbeitungseinrichtung die erfassten Informationen zu einer Gruppeninformation zusammenzufassen und über den Datenkanal IW der Datenverarbeitungseinrichtung SE zu übermitteln. Dies würde bedeuten, dass senderseitig gar kein Lieferschein erstellt wurde, sondern dass empfangsseitig allein ein Empfangsschein erzeugt und dem Sender übermittelt wird. Dieser könnte so dann aus der so erhaltenen Information eine Rechnung erzeugen. In einer weiteren Variante ist vorgesehen dass die Überwachungseinrichtung die über den Empfangsreader ER1 von der Datenverarbeitungseinrichtung EE zur Verfügung gestellte Information mit Bestellinformation verglichen wird, und der Empfangsschein detailliertere Informationen über den Datenkanal an den Sender übermittelt. Dies könnten beispielsweise Abweichungen oder Informationen über eine bestimmte Bestellung beinhalten.

Die Zusammenfassung zu einer Gruppeninformation ist jedoch sendeseitig nicht zwingend notwendig. Sie könnte auch über den Informationskanal IW der sendeseitigen Datenverarbeitungseinrichtung in Form von Einzelinformationen übermittelt werden, diese vergleicht die empfangenen Information in der Überwachungseinrichtung mit Sendeinformationen, fasst diese in Gruppeninformationen zusammen und übermittelt diese wiederum über den Informationskanal IW an die empfangsseitige Datenverarbeitungseinrichtung EE zurück. Der gerade beschriebene Weg erscheint etwas kompliziert und abwegig, kann jedoch in bestimmten Fällen, die gegebenenfalls durch logistische Infrastruktur vorgegeben sind, von Vorteil sein.

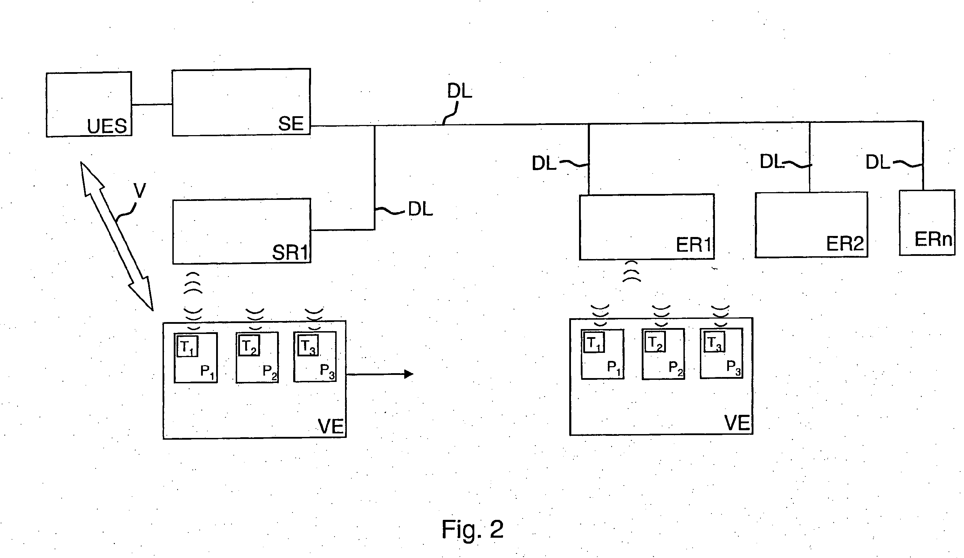

Die zuletzt beschriebene Variante führt zum zweiten in Figur 2 dargestellten Ausführungsbeispiel der Anordnung. Bei dieser ist der Empfangsreader ER1 über eine vergleichbare Datenleitung DL wie der Sendereader SR1 mit der sendeseitigen Datenverarbeitungseinrichtung SE verbunden. Dieses Ausführungsbeispiel ist beispielsweise auf firmeninterne Logistik anwendbar, wo aufwändige interne Transportwege notwendig sind, um den Betriebsablauf zu gewährleisten. In einem solchen Fall, wären ein oder mehrere Empfangsreader ER1 bis ERn-beispielsweise über ein so genanntes LAN-Netz mit einer zentralen Datenverarbeitungseinrichtung SE verbunden.
Die Überwachungseinrichtung UE erstellt einen Produktionsplan und schickt Verpackungseinheiten mit bestimmten Produkten an bestimmte Produktionsstellen. Für die interne Logistik beziehungsweise Lagerhaltung ist es dann vorteilhaft, wenn die in Verpackungseinheiten VE, dies könnten beispielsweise Transportkörbe sein, enthaltenen Produkte, die mit RFID-Transpondern T1 bis T3 versehen sind, zu einer Gruppeninformation zusammengefasst werden. Die Herausgabe dieser Verpackungseinheit VE wird an einen Sendereader SR1 erfasst und der Empfang dieser Verpackungseinheit VE wird wiederum an einer bestimmten Produktionsstelle von einem Empfangsreader ERN erfasst und über das LAN an die Datenverarbeitungseinrichtung SE übermittelt. Diese vergleicht die empfangene Information mit der zuvor bei der Ausgabe erzeugten Gruppeninformation und ermittelt, dass die von ihr ausgegebene Verpackungseinheit an einer bestimmten Produktionsstelle eingegangen ist.

War in den vorangegangenen Ausführungsbeispielen stets davon ausgegangen, dass alle Transponder T1 bis T3 und die darin abgespeicherte Information vollständig ausgelesen wurde und zu Gruppeninformationen zusammengefasst wurde, beziehungsweise die ausgelesene Information mit Gruppeninformation verglichen wurde oder zu einer eigenen Gruppeninformation zusammengefasst und dann mit einer anderen Gruppeninformation verglichen wurde, so ist an dieser Stelle darauf hinzuweisen, dass so komfortabel, wie der Umgang mit der RFID-Technologie erscheint, so einfach diese jedoch sich nicht immer darstellt. Insbesondere wenn viele Einzelprodukte zu einer Verpackungseinheit zusammengefasst sind, oder wenn bestimmte Verpackungsmittel die Kommunikation zwischen dem RFID-Transponder und dem Sendereader oder dem Empfangsreader erschweren, sind nicht immer alle Informationen oder Informationen aller Transponder vollständig lesbar sind. Diese technische Unwägbarkeit verliert ihre Bedeutung, da jeder Transponder, wie zuvor bereits beschrieben, mit einer UID versehen ist. Es ist somit möglich, dass nur ein Teil der Transponder ausgelesen wird.

Nachfolgend wird ein Beispiel erläutert. Die Verpackungseinheit VE mit den drei RFID-Transpondern T1 bis T3 wird an dem Sendereader SR1 vorbeigeführt. Der Sendereader SR1 versucht die Information der drei RFID-Transponder T1 bis T3 zu lesen. Er liest jedoch nur die Information der Transponder T1 und T3 und nur diese Information wird in der Datenverarbeitungseinrichtung von der Überwachungseinrichtung zur Gruppeninformation zusammengestellt. Die Gruppeninformation mit den Informationen der Transponder T1 und T3 wird über den Informationskanal IW der empfangsseitigen Datenverarbeitungseinrichtung EE übermittelt. Diese gibt die Gruppeninformation der Überwachungseinrichtung UEE weiter. Gelangt nunmehr die Verpackungseinrichtung VE mit den drei Produkten P1 bis P3 und den damit verbundenen RFID-Transpondern T1 bis T3 am Empfangsreader ER1 an, so wird dieser wiederum versuchen die drei RFID-Transponder T1 bis T3 vollständig auszulesen. Gelingt ihm dies, stellt er die UIDs der drei RFID-Transponder T1 bis T3 der Datenverarbeitungseinrichtung EE zur Verfügung die diese an die Überwachungseinrichtung UEE weiterleitet. Hier wird die empfangene Information, das heißt die UIDs der RFID-Transponder T1 bis T3 mit Gruppeninformationen verglichen. Die Überwachungseinrichtung wird somit feststellen, dass sie eine Gruppeninformation erhalten hat, die die UIDs der Transponder T1 bis T3 enthält. Da sie den Empfang der UIDs der Transponder T1 bis T3 mitgeteilt bekommen hat, kann sie ermitteln, dass der Eingang der Verpackungseinheit VE zu bestätigen ist. In diesem Fall wird sie sogar den vollständigen Empfang bestätigen.

Genauso gut ist es möglich, dass senderseitig alle Transponder vollständig erfasst und die Identitätsinformationen zur Gruppeninformation zusammengeführt werden. Wird empfangsseitig dann nur ein Teil der RFID-Transponder ausgelesen, so wird durch die empfangenen UIDs jederzeit die Verpackungseinheit eindeutig identifizierbar sein. Empfangsseitig ist es dann wiederum eine Frage des Vertrauens in den Transportweg, ob von einer Vollständigkeit der Verpackungseinheit VE ausgegangen wird oder nicht. Das soeben beschriebene Beispiel, das durch das Vorhandensein von eindeutigen Informationen, wie sie beispielsweise als UID in den RFID-Transpondern abgespeichert ist, eindeutig auf eine Gruppe schließen kann, ist auch auf das zweite Ausführungsbeispiel, bei dem die Empfangsreader zum Beispiel über ein LAN-Netz mit einer gemeinsamen Datenverarbeitungseinrichtung verbunden sind, anwendbar.

Es wird hier auf die Besonderheit hingewiesen, dass durch das Einbinden der UID eines einzelnen Transponders in die Gruppeninformation eine Verpackungseinheit eindeutig identifizierbar ist.

Die vorangegangenen Ausführungsbeispiele haben eine Vielzahl von Ausgestaltungen der Erfindung im Einzelnen erläutert. Es sei jedoch darauf hingewiesen, dass die Erfindung nicht auf diese beschriebenen Ausführungsbeispiele beschränkt sind, sondern dass sie untereinander kombinierbar sind und somit weiter nicht im Einzelnen beschriebene Ausführungen mit gleichem Erfindungsgedanken denkbar sind. So ist es selbstverständlich, dass das Ausführungsbeispiel gemäß Fig. 2 ebenfalls den unter Bezugnahme auf Fig. 1 beschriebenen Sensor aufweisen kann und dessen Funktion nur zur Vermeidung von Wiederholungen in Fig. 2 weggelassen wurde.

Insbesondere sei darauf hingewiesen, dass es sich bei der in einem elektronischen Liefer- bzw. Empfangschip übermittelten Gruppeninformation im Grenzfall allein um die UID eines einzelnen einer Produkteinheit zugewiesenen Transponderchips handeln kann.

## Patentansprüche

1. Überprüfungsverfahren, bei dem
- eine Identitätsinformation zumindest einer mit einem RFID-Transponder (T1-T3)verbundenen Produkteinheit (P1-P3) von einer RFID-Leseeinheit (SR1; ERn) ermittelt wird,
- die Identitätsinformation an eine Datenverarbeitungseinrichtung(SE;EE) weitergeleitet wird,
- eine Gruppenidentifikation, die eine Gruppe mit zumindest einer Identitätsinformation kennzeichnet, bereitgestellt wird und aus der Gruppenidentifikation zumindest eine Identitätsinformation extrahiert wird,
- die ermittelte Identitätsinformation mit der extrahierten Identitätsinformation verglichen wird,und
- wenn die ermittelte Identitätsinformation mit der extrahierten Identitätsinformation übereinstimmt, dies signalisiert wird.

2. Verfahren nach Anspruch 1, bei dem ein an der RFID-Leseeinheit ermittelte Identitätsinformation in der Datenverarbeitungseinrichtung der Gruppe zugeordnet und für die Erstellung der Gruppenidentifikationsinformation, die diese Gruppe kenzeichnet verwendet wird.

3. Verfahren nach Anspruch 2, bei dem die Gruppeninformation in einem ersten Abschnitt der Datenverarbeitungseinrichtung erstellt und über einen Datenübertragungskanal einem zweiten Abschnitt der Datenverarbeitungseinrichtung übermittelt wird.

4. Verfahren nach einem der vorhergehenden Ansprüche, bei dem dann, wenn der Vergleich zwischen der ermittelten Identitätsinformation mit aus der Gruppenidentifikation extrahierten Identitätsinformation übereinstimmt, eine Zuordnung der Produkteinheit zu der durch die Gruppenidentifikationsinformation **gekennzeichnet**en Gruppe erfolgt.

5. Verfahren nach einem der vorhergehenden Ansprüche, bei dem die Zuordnung zu der durch die Gruppenidentifikation **gekennzeichnet**en Gruppe dann erfolgt, wenn mehrere Identitätsinformationen ermittelt wurden, die bei einem Vergleich mit den aus der Gruppeninformation extrahierten Identifikationsinformationen übereinstimmen.

6. Überwachungseinrichtung mit zumindest einer ersten und einer zweiten RFID-Transponderleseeinrichtung (SR1, ER1) und einer Datenverarbeitungseinrichtung (SE, UE), die über jeweilige Datenleitungen mit den RFID-Transponderleseeinrichtungen (SR1, SR2,SRn)verbunden sind, und die eine Einrichtung zum Zusammenfassen von Identitätsinformationen, die von einem der RFID-Transponderleseeinrichtungen gelesen sind, zu einer Gruppenidentifikationsinformation und eine Auswerteeinrichtung aufweist, die mit einer RFID-Transponderleseeinrichtung gelesene Identifikationsinformation mit aus Gruppenidentifikationsinformationen extrahierte Identitätsinformationen vergleicht und eine Information ausgibt, die die zugeordnete Gruppe bezeichnet.

7. Überwachungseinrichtung, bei der die Datenverarbeitungseinrichtung einen Senderabschnitt (SE, UES)und einen Empfängerabschnitt (UEE) aufweist, die über einen Datenübertragungskanal (IW)verbunden sind und wobei der Senderabschnitt und der Empfängerabschnitt jeweils zumindest einen über eine Datenleitung (DL) angeschlossene RFID-Transponderleseeinrichtung aufweist.

8. Überwachungseinrichtung nach Anspruch 7, bei dem der Senderabschnitt derart ausgebildet ist, dass er die Gruppeninformation erzeugt und über den Datenübertragungskanal an den Empfängerabschnitt überträgt.
